# EUROPEAN PATENT APPLICATION

(11) **EP 2 667 331 A1**
(43) Date of publication of application: **27.11.2013**
(21) Application number: 11859230.2
(22) Date of filing: 24.02.2011
(51) Int. Cl.: G06Q 10/00, G06Q 30/00

(54) **METHOD FOR PROVIDING MULTI-LEVEL MEMBERSHIP MANAGEMENT SERVICE**

(71) Applicant: Rho, Kyoo Soo, Seoul 137-160 (KR)
(72) Inventor: Rho, Kyoo Soo, Seoul 137-160 (KR)
(74) Representative: ABG Patentes, S.L.
(86) International application number: PCT/KR2011/001278
(87) International publication number: WO 2012/115292

(57) **Abstract**

Disclosed is a method of providing a multi-level membership management service for feeding back profit by setting up a multi-level membership relationship for members subscribed online. A management server sets up a multi-level membership relationship where a user who applied for a membership subscription is registered as a member, and is also included as an inferior of a predetermined location within a pre-established tree structure. When a specific product or service launched by a specific member from the members registered in the management server is sold, the management server re-establishes the tree structure so that the specific member is put as the most superior in the tree structure, and the profit from the specific product is fed back to each of the members according to the re-established tree structure. While the conventional multi-level membership management structure does not enable a newly subscribed person to attract inferiors, the present invention distributes the profit according to the re-establishment where a specific product or service newly launched by the newly subscribed person is put at the most superior, thereby enabling lower psychological resistance towards new membership subscription, which allows multi-level member management to become more active.

## Description

### [Technical Field]

The present invention relates to a method for providing a multi-level membership management service, and more particularly, to a method for providing a membership management service which feedbacks profit to a superior by setting up a multi-step tree structure with respect to a plurality of members subscribed online in a management server.

### [Background Art]

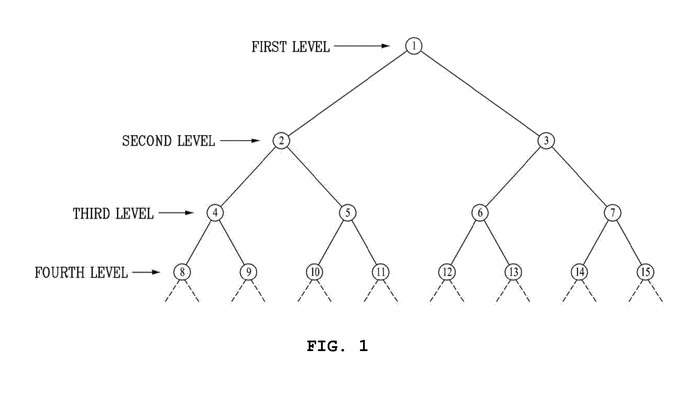

With the development of web and Twitter or messenger, a Social Network Service (SNS) has been applied as various marketing schemes. The commonest one of conventional SNSs is a multi-level marketing. As shown in FIG. 1, in a typical multi-level marketing, a firstly subscribed specific member (member ①) (hereinafter, denote each member number illustrated in FIG. 1, if necessary for description) becomes a first level member, inferior members are sequentially configured in such a way that other members (members ② and ③) subscribed by recommendation using contact information of the first level member becomes second level members, which are provided as an inferior of the first level member, and other members (members ④⑤⑥⑦) subscribed by recommendation from the second level members become third level members so that a total tree structure is achieved. Although one member subscribes two members for the purpose of simplifying the drawing and description, the number of inferior members who may be subscribed by each member is not limited thereto.

Under the structure, if one member sells a specific product to a third person or purchases the product to output a sale, sequential feedback with respect to the same sale is achieved such that an amount of money becomes gradually reduced toward the most superior. For example, assuming that feedback to a superior is set to 10% of profit output from an inferior, if a fourth level member ⑩ outputs a sale of one million won by purchase of a specific product or selling the specific product to other person, a third level member ⑤ being a superior of the fourth level member ⑩ receives feedback of one hundred thousand won being 10% of the one million won, a second level member ② being a superior of the third level member ⑤ receives feedback of ten thousand won being 10% of the one hundred thousand won, and a first level member ① being a superior of the second level member ② receives feedback of one thousand won being 10% of the ten thousand won. As described above, the members sequentially receive feedback from the member outputting a sale to a superior thereof.

According to a multi-level membership management system, the more lower level members are subscribed through effort of members, the more expected profit is increased. This advantage motivates a person other than the member to subscribe as new member or an existing member to additionally ensure more members.

Although the foregoing advantage, the existing multi-level membership management method is not significantly activated due to various disadvantages.

That is, under the typical multi-level membership management system, even when lower level subscribers greater than a predetermined number are ensured through his/her own effort after the member subscribes, the member may obtain profit. If members greater than the predetermined number are subscribed, many inferiors may be subscribed through their effort, but great profit is not expected until a corresponding level reaches.

Further, when the inferior subscribes as the member, a sale of the inferior contributes for only the benefit of a superior. Accordingly, the inferior feels to be obedient for the benefit of other persons, which becomes a great mental limitation to attract a new subscriber.

Such a problem is caused by redistributing the profit from the inferior to the superior under a set tree structure as illustrated in FIG. 1. That is, the existing multi-level membership management system may use various schemes in a tree structure or a profit distribution method such as a binary scheme, a breakaway scheme, a matrix scheme, and a unilevel scheme. Since the foregoing schemes pursue only a downward certainty tree structure, the schemes are poor in money and position sides only because the inferior is registered later than the superior.

### [Disclosure]

### [Technical Problem]

The present invention has been made in view of the above problems, and provides a method for providing a multi-level membership management service of profit distribution configuration which may achieve feedback under a predetermined condition in mutual relation between entire members even when a newly subscribed person under the conventional multi-level membership management structure does not attract inferiors, thereby reducing psychological resistance towards new membership subscription, which allows multi-level member management to become more active.

### [Technical Solution]

In order to achieve the objects as described above, there is provided a method for providing a multi-level membership management service which sets up a multi-level membership relation subscribed online and feedbacks profit according to a predetermined rule based on the set multi-level membership relation when a predetermined product or service is sold, the method including: a) receiving a request for membership subscription with respect to users of a plurality of user equipment from the user equipment connecting with a management service online by the manager server; b) registering the user request for the membership subscription as a member by setting a multi-level membership relation of a tree structure putting the user as an inferior of a predetermined position of an established tree structure; and c) re-establishing the tree structure such that the specific member is put as a most superior in the tree structure by the management server when a specific product or service launched by a specific member from the members registered in the management server is sold so that the profit from the specific product is fed back to each of the members according to the re-established tree structure, wherein the re-establishment of the tree structure in step c) is achieved by arranging relationship between a superior and an inferior in a reverse order such that the specific member is put as the most superior with respect to superiors directly connected to the specific member while an existing connection state between a superior and an inferior in the tree structure maintains as it is.

The management server may register the specific product or service launched by the specific member in step c) according to a request from the user equipment of the specific member.

The management server may receive information about an introducer of the user together with the requesting the membership subscription in step a), and t

The predetermined position is a lower position of the introducer in step b).

### [Advantageous Effects]

While the conventional multi-level membership management structure does not enable a newly subscribed person to attract inferiors, the present invention can distribute the profit according to the re-establishment where a specific product or service newly launched by the newly subscribed person is put at the most superior, thereby enabling lower psychological resistance towards new membership subscription, which allows multi-level member management to become more active.

### [Description of Drawings]

FIG. 1 is a diagram illustrating a tree structure in a multi-level membership management method according to the related art.

FIG. 2 is a schematic diagram illustrating a system for providing a multi-level membership management service according to an embodiment of the present invention.

FIG. 3 is a diagram illustrating an example of a tree structure in a system for providing a multi-level membership management service according to an embodiment of the present invention.

FIG. 4 is a diagram illustrating an extended tree structure obtained by adding new members to the tree structure of FIG. 3.

FIG. 5 is a diagram illustrating another example of FIG. 3.

### [Best Mode]

### [Mode of the Invention]

Hereinafter, exemplary embodiments of the present invention are described with reference to the accompanying drawings in detail.

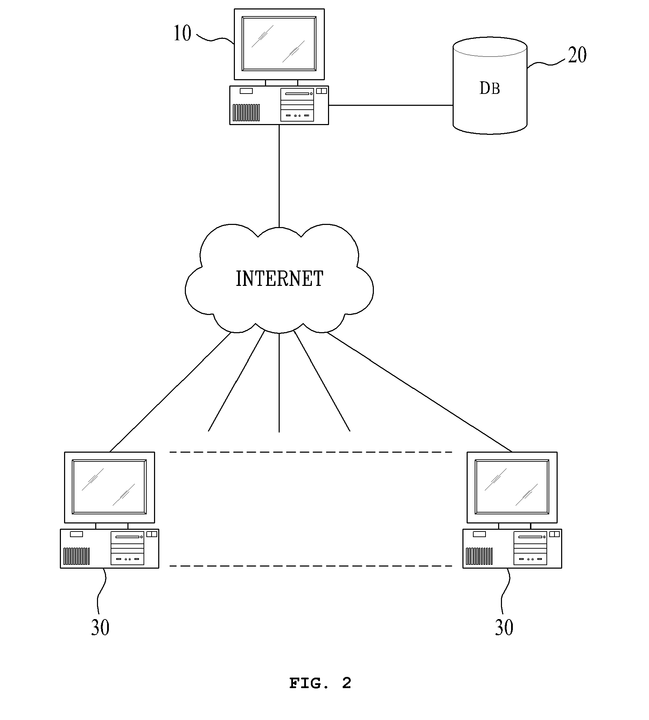

FIG. 2 is a schematic diagram illustrating a system for providing a multi-level membership management service according to an embodiment of the present invention. The system for providing a multi-level membership management service according to an embodiment of the present invention includes a management server 10, a database (DB) 20, and a plurality of user equipment (UE) 30.

The management 10 performs main processing of a service according to the present invention. That is, the management server 10 receives membership subscription from the UE 30 connected through Internet, and establishes a multi-level tree structure with respect to the subscribed members. When a specific product or service by the members is sold, the manager server 10 distributes profit between the members. The DB 20 stores a tree structure with respect to the members registered by the management server 10. The management server 10 queries the DB 20 to distribute profit upon a sale by each member based on the tree structure. As will be described below, when a specific product or service is sold, the management server 10 queries the DB 20 to recognize the stored tree structure, reorganizes the tree structure to establish a new tree structure, and distributes the profit.

The UE 30 is a terminal used by individual users, and accesses the management server 10 to apply for a membership subscription so that the user is registered as a member who receives a multi-level membership management service. When applying to a membership relationship for membership registration, the user also inputs information about an introducer who introduced him/her being an offer. Accordingly, the management server 10 acquires the information about the introducer, and adds a branch in which the introducer is a superior and the offer is an inferior to an existing tree structure as illustrated in FIG. 1 to add a new member to the tree structure. By repeating the foregoing procedures, the branch is gradually added to the tree structure of FIG. 1 so that the members are extended downward and laterally with a plurality of levels.

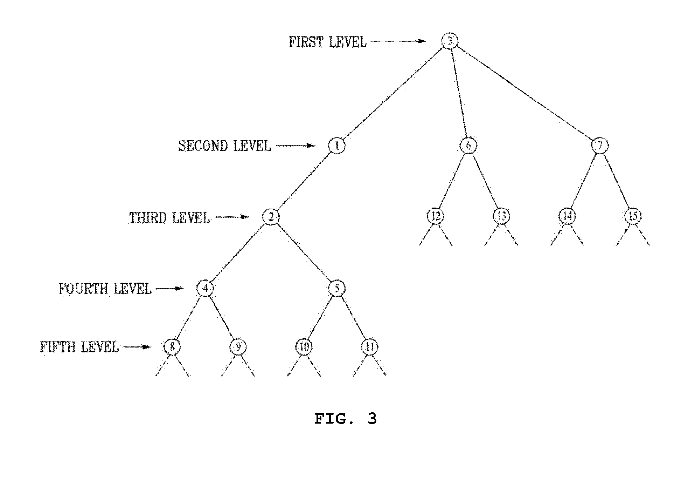

The present invention does not distribute all profits based on the tree structure shown in FIG. 3 but is aimed at varying a tree structure according to a product or service. That is, assuming that a tree structure according to the related configured by the management server 10 is created by a product A, profit feedback is achieved, when the product A is sold by each member, in the same procedure as that of the related art based on the tree structure as illustrated in FIG. 1.

However, when a specific member among members registered in the tree structure finds or develops a new product available to other members or third persons and registers the new product in the management server 10, the management server 10 re-establishes a new tree structure with a sale output by members in the established tree structure with respect to the product registered by the specific member to feedback profit according to the re-established tree structure. The re-establishment of the tree structure and profit distribution under the re-established tree structure is achieved by the management server 10.

The re-establishment of the tree structure according to the present invention refers to putting the specific member as the most superior in the tree structure. In detail, the re-establishment of the tree structure refers to arranging relationship between a superior and an inferior in a reverse order so that the specific member is put as the most superior with respect to superiors directly connected to the specific member while an existing connection state between a superior and an inferior in the tree structure maintains as it is.

Hereinafter, a scheme of re-establishing the tree structure will be descried in detail with reference to FIG. 3. FIG. 3 is a diagram illustrating an example of a re-established tree structure in the method for providing a membership management service. FIG. 3 illustrates a case where a member ③ in FIG. 1 is the specific member (that is, member launching a new product B and registering the launched new product in the management server 10 as a launching product thereof). There is only one member ① superior to the member ③

If the product B is sold, superior/inferior relationship between the member ③ and the member ⑩ in feedback of the product B is reversed so that the member ③ becomes the superior and the member ① becomes the inferior. Relationships between other members maintain as it is. That is, the member ② who was the inferior of the member ① is the inferior of the member ① as it is, and a structure of the inferior of the member ② and inferiors thereof are the same. The members ⑥ and ⑦ being an inferior of the member ③ and inferiors thereof have the same structure. In this scheme, a re-established tree structure having the member ③ as the most superior is created, and an existing feedback scheme is equally applied under the re-established tree structure.

For example, if a member ⑫ generates a sale of one million won, one hundred thousand won being 10% thereof is distributed to the member ⑥, and ten thousand won being 10% of profit of the member ⑥ is distributed to the member ③. If a member ⑤ generates a sale of one million won, one hundred thousand won being 10% thereof is distributed to the member ②, ten thousand won being 10% of profit of the member ③ is distributed to the member ①, and one thousand won being 10% of profit of the member ① is distributed to the member ③. According to this scheme, the member ① and inferiors thereof may be included in the tree structure as inferiors of the member ③ as compared with an existing tree structure. Accordingly, the member ③ may have all inferiors implemented by the member ① being a superior of the member ③ as an inferior thereof with respect to a new product launched by the member ③ while maintaining feedback with respect to previous members being inferiors of the member ③.

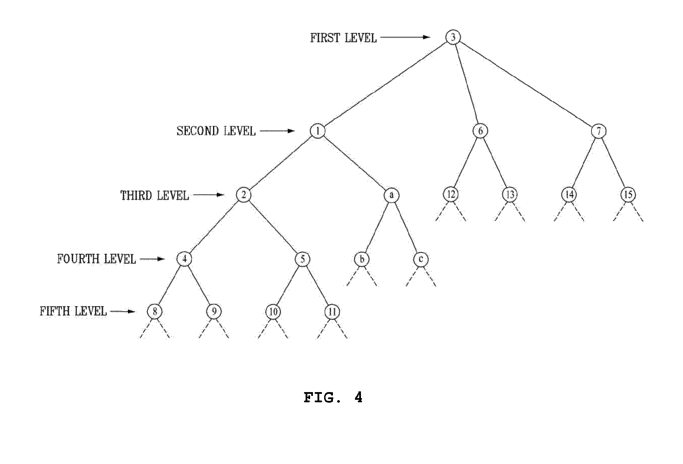

FIG. 4 is a diagram illustrating an extended tree structure after a new member is added to the tree structure of FIG. 3. If a structure as illustrated in FIG. 3 continuously maintains, the member ① may obtain profit with respect to a newly launched product B from the member ② side line being one of tree structures previously implemented by the member ①. However, although after a tree structure with respect to the product B is established, for example, when the member ① invites a new member ⓐ, the member ⓐ invites members ⓑ and ⓒ to extend a lower tree thereof, the member ① may create profit from the member ⓐ side being a new branch other than only the member ② which is a previously implemented branch with respect to the product B. Accordingly, the member ① is motivated to gather a new member after the new product B is launched.

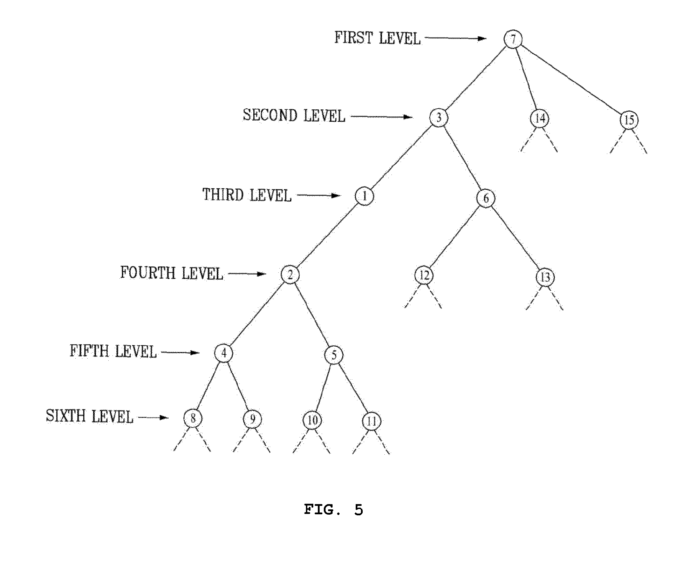

FIG. 5 is a diagram illustrating another example of FIG. 3. For example, FIG. 5 illustrates a case where the member ⑦ launches a product C which is a new product. Superior and inferior relationships between the member ⑦ launching the product C, members ③ and ① being direct superiors thereof are reversed. In the position of the member ③, the member ① who was a superior of the member ③ is changed to an inferior thereof with respect to a product launched by the member ⑦ who was an inferior of the member ③. By the foregoing scheme, a new tree structure having the member ⑦ newly launching the product C as the most superior is established, a profit distribution structure of the new tree structure is the same as that according to the related art.

For example, the re-establishing scheme of the tree structure according to the present invention motivates a user who has insufficient inducing performance of new members but develops a product or service attractive to be directly purchased by the members in the tree structure or do business to other persons by the members, to subscribe in a tree structure of this scheme. In addition, since psychological inducement indicating that persons newly subscribed in an existing tree structure do not serve existing members is generated, it is easy for existing members to attract new members. Accordingly, extension of the tree structure may be achieved in a geometrical progression as compared with an existing scheme.

Meanwhile, although the present invention illustrates a scheme of distributing profit to a superior under the tree structure of FIG. 1 as a general profit distribution scheme in which a re-established tree structure is applied equally to that in prior establishment, but may introduce re-establishment concept of a tree structure with respect to a new launching product under various existing profit distribution schemes.

For example, a modified example of the existing profit distribution scheme may include a binary scheme and a unilevel scheme. The binary scheme refers to a scheme of distributing profit based on less profit side when more profit is generated from a member ② line and less profit is generated from a member ③ in the tree structure as illustrated in FIG. 1. The unilevel scheme is a scheme which ensures minimum profit to the member ① such that profit is distributed from the member ② to the member ① at a predetermined ratio and profit of the member ① is not greater than that of the member ② when much profit is generated from the member ② line, based on the member ①, and profit is scarcely generated from the member ③ line. A scheme of re-establishing a preset tree structure with respect to a newly launched product according to the present invention is applicable to various existing profit distribution schemes.

There are various existing schemes of establishing the tree structure, which is applicable to the present invention. For example, a modified example of the existing tree structure establishment scheme may include a breakaway scheme and a matrix scheme. The breakaway scheme is a scheme which independently separates a new tress structure having the member ② as the most superior by separating the member ② from the member ① to further provide benefit to the member ② when profit greater than a predetermined value is generated from a lower tree of a member ② side branch, based on the member ① in the tree structure as illustrated in FIG. 1 (e.g., when total profit is one billion won or greater or when profit greater than ten million won every month continued for one year). Different from a scheme of registering a member as an inferior of an introducer according to input of the introducer like the embodiment upon membership subscription, the matrix scheme is a scheme which extends a pyramid structure having a regular triangle downward by subscribing a member as an inferior in the order of a member number shown in FIG. 1 based on a first member ① regardless of the introducer. In the various tree structure establishing schemes, the present invention re-establishes a tree structure based on a member launching an existing established tree structure with respect to a newly launched produce to distribute profit.

Profit distribution of the present invention may be achieved by various schemes in which the management server 10 transmits the profit to an account number registered in the management server 10 by each member or supplies the profit in the form of a point. The various schemes are generally known in the art, and thus a detail description thereof is omitted.

Although embodiments have been described with reference to a number of illustrative embodiments thereof, it should be understood that numerous other modifications and embodiments can be devised by those skilled in the art that will fall within the spirit and scope of the principles of this disclosure, and variations and modifications can be made to the disclosure without departing from the technical spirit and equivalent scopes of the appended claims of the present invention.

## Claims

1. A method for providing a multi-level membership management service which sets up a multi-level membership relation subscribed online and feedbacks profit according to a predetermined rule based on the set multi-level membership relation when a predetermined product or service is sold, the method comprising:
a) receiving a request for membership subscription with respect to users of a plurality of user equipment from the user equipment connecting with a management service online by the manager server;
b) registering the user request for the membership subscription as a member by setting a multi-level membership relation of a tree structure putting the user as an inferior of a predetermined position of an established tree structure; and
c) re-establishing the tree structure such that the specific member is put as a most superior in the tree structure by the management server when a specific product or service launched by the specific member from the members registered in the management server is sold so that the profit from the specific product is fed back to each of the members according to the re-established tree structure,
wherein the re-establishment of the tree structure in step c) is achieved by arranging relationship between a superior and an inferior in a reverse order such that the specific member is put as the most superior with respect to superiors directly connected to the specific member while an existing connection state between a superior and an inferior in the tree structure maintains as it is.

2. The method of claim 1, wherein the management server registers the specific product or service launched by the specific member in step c) according to a request from the user equipment of the specific member.

3. The method of claim 1 or 2, wherein the management server receives information about an introducer of the user together with the requesting the membership subscription in step a), and
the predetermined position is a lower position of the introducer in step b).
